# NOUVEAU FASCICULE DE BREVET EUROPEEN

(11) **EP 0 912 060 B2**
(45) Date de publication et mention de la décision concernant l'opposition: **25.05.2011**
(45) Mention de la délivrance du brevet: 02.01.2002
(21) Numéro de dépôt: 98402616.1
(22) Date de dépôt: 21.10.1998
(51) Int. Cl.: H04N 7/18

(54) **Système et procédé d'accès à des informations numériques sur un réseau vidéo**
Zugangssystem und -verfahren zu digitalen Informationen in einem Videonetz
System and procedure to give access to digital information in a video network

(30) Priorité: 24.10.1997 FR 9713394; 18.11.1997 FR 9714455
(43) Date de publication de la demande: 28.04.1999
(73) Titulaire: Micsystemes S.A., 75016 Paris (FR)
(72) Inventeur: Busch Gérard, 91000 Evry (FR); Kaplan Robert, Auffargis 78610 Le Perray en Yvelines (FR)
(74) Mandataire: Pontet, Bernard

(56) Documents cités:
- WO-A-93/16558
- WO-A-97/09827
- GB-A- 2 118 750
- GB-A- 2 296 169
- US-A- 5 389 963
- Documentation sur le produit "Système de communication vidéo pour hôtel" de Prodac GmbH, Köln, à titre de mode d'emploi en réponse à la demande du 05.09.1988 (E3)
- expertise VDE datée du 28.10.1986 pour le convertisseur de réception amont "Sélecteur de communication" CS200, incluant les plans de circuit électrique et les plans de disposition des broches PIN
- Documentation "VISICABLE+" de janvier 1992
- Documentation "VISICABLE+/++" du 24 septembre 1996

## Description

La présente invention concerne un système et un procédé d'accès à des informations numériques sur un réseau de vidéo. Elle vise également un procédé mis en oeuvre dans ce système.

Il existe actuellement, dans les équipements et établissements collectifs ou publics (enseignement, hôpitaux, hôtellerie), une forte demande d'accès à des informations numériques provenant de sources diverses telles que des sites Internet ou des disques de stockage (CD-ROM, DVD,..) contenant des vidéogrammes. Or, les locaux à usage éducatif, administratif, industriel ou culturel sont fréquemment équipés de réseaux vidéo internes sur paire torsadée qui permettent de diffuser des informations issues de multiples sources telles que des programmes de télévision hertzienne ou par satellite, ou des cassettes préenregistrées. Le présent déposant a d'ailleurs développé pour ces réseaux vidéo internes un système de commutation vidéo permettant de distribuer depuis un serveur et sur une seule paire torsadée, l'image et le son stéréo vers des postes de télévision, et en retour, de piloter les sources de manière sélective, c'est à dire un appareil, parmi d'autres de la même marque et du même protocole infrarouge, depuis chaque poste de télévision, au moyen d'un équipement de télécommande infrarouge.

Il existe actuellement des systèmes d'accès à des informations numériques mettant en oeuvre des techniques de transmission large bande et utilisant par exemple des réseaux câblés en fibre optique. Avec ces systèmes d'accès, il est possible d'effectuer une transmission numérique intégrale depuis une source d'informations numériques vers un récepteur qui peut être de technologie numérique ou analogique. Mais de tels systèmes sont actuellement particulièrement onéreux et impliquent en outre un câblage spécifique. Tant que ce mode de diffusion "tout numérique" ne sera pas devenu abordable économiquement, il n'est pas envisageable d'en équiper la plupart des équipements et locaux collectifs concernés par un accès à des informations numériques.

Il existe aussi des systèmes de diffusion vidéo par câble coaxial, mais ces systèmes, qui présentent une bande passante limitée, ne permettent pas la diffusion de données numériques à haut débit et ne peuvent procurer à des utilisateurs de postes de télévision ou de moniteurs connectés au réseau vidéo la possibilité d'interagir avec les sources d'informations, d'accéder à des réseaux externes et de commander à distance certaines opérations de navigation sur des réseaux de communication tels qu'Internet.

Le document WO9316558A décrit un système pour accéder à des informations numériques sur un réseau vidéo, comprenant, en un site central, des moyens pour convertir des informations numériques provenant de ressources numériques locales ou distantes en informations analogiques aptes à être transportées sur le réseau vidéo.

Le document WO9709827A décrit un système de distribution comprenant un système de distribution de canaux agencé pour recevoir des signaux de contenu d'un réseau de transmission par télécommunication et un système d'accès comprenant des unités de modulation et une unité d'accès aux canaux. Les contenus sont diffusés sur un réseau vidéo à paires torsadées.

Le but de la présente invention est de remédier à ces inconvénients en proposant un système d'accès à des informations numériques sur un réseau vidéo, qui soit moins onéreux que les systèmes actuels, et rende ainsi possible la consultation de ressources numériques dans des lieux collectifs tels que des établissements éducatifs, des centres hospitaliers ou des équipements hôteliers, tous immeubles tertiaires ou autres.

Cet objectif est atteint avec un système pour accéder à des informations numériques sur un réseau vidéo, comprenant :
- en une pluralité de sites d'accès, des postes de télévision connectés au réseau vidéo, des moyens pour piloter à distance de manière sélective une ou plusieurs ressources numériques, comprenant un clavier à infrarouge, et des moyens locaux d'interface interposés entre chaque poste de télévision et une borne de connexion au réseau vidéo, ces moyens locaux d'interface étant agencés, pour recevoir des signaux de pilotage transmis par voie infrarouge par les moyens de pilotage, et
- en un site central une unité centrale comprenant des moyens pour émettre des informations sur le réseau vidéo, des moyens d'accès à des ressources numériques internes ou externes, et des moyens pour convertir des informations numériques provenant de ressources numériques locales ou distantes en informations analogiques aptes à être transportées sur le réseau vidéo,
caractérisé en ce que les moyens locaux d'interface comprennent des moyens pour convertir les signaux de pilotage transmis par voie infrarouge en signaux transmissibles sur le réseau vidéo et sont agencés pour transmettre lesdits signaux à l'unité centrale via ledit réseau vidéo,
et en ce que l'unité centrale comprend en outre une carte de réception infrarouge conçue pour recevoir lesdits signaux de pilotage desdites ressources numériques ainsi transmis.

Le système d'accès comprend en outre, au niveau des sites d'accès, des moyens pour piloter à distance des ressources numériques, et au niveau du site central, des moyens pour recevoir des signaux de pilotage émis via le réseau vidéo par les moyens de pilotage respectifs de chaque site d'accès.

Le système d'accès selon l'invention propose une solution originale et économique au problème de la diffusion et de la consultation d'informations numériques dans des sites équipés de réseaux vidéo existants. On peut ainsi consulter des informations et données issues de ressources numériques en utilisant un réseau audiovisuel existant, ce qui présente un intérêt économique considérable. De plus, un atout majeur du système selon l'invention réside, d'une part, dans le fait que les informations numériques ainsi converties peuvent être transportées sur une simple paire torsadée jusqu'à 500 mètres de distance, et d'autre part dans le fait que les signaux de pilotage sont eux aussi transmis sur la même paire torsadée, ce qui constitue une nouveauté par rapport aux systèmes existants.

En particulier, le système selon l'invention permet de consulter à distance et de piloter l'ensemble des ressources numériques auxquelles peut accéder un poste de travail informatique disposé dans un site central et relié à un réseau interne ou externe. Ceci concerne notamment des réseaux informatiques, Intranet ou Internet.

Des applications du système d'accès selon l'invention peuvent aisément être envisagées dans des domaines tels que l'enseignement (universités, lycées et collèges), l'hôtellerie, les hôpitaux, les paquebots, le transport aérien de passagers, les centres de conférence pour la traduction simultanée, ainsi que l'équipement des immeubles ou tous sites intelligents.

Un intérêt majeur du système selon l'invention réside notamment dans le fait qu'il permet d'accéder au réseau Internet ou à des réseaux Intranet à partir de postes de télévision connectés à un réseau vidéo. Les utilisateurs de ce système peuvent recevoir des images et du son provenant d'un ordinateur connecté à un réseau numérique sur un écran vidéo classique et travailler sur ces images grâce à un clavier sans fil, sans avoir à se déplacer sur le point de connexion. De plus, la réception des images d'Internet sur des postes de télévision procure une qualité de réception et un confort de visualisation appréciables, notamment dans des salles de classe.

Par ailleurs, le système d'accès selon l'invention rend possible le visionnement collectif d'Internet pour apprendre à utiliser celui-ci, et l'utilisation d'images et de sons provenant de n'importe quel point du monde directement dans la salle de classe. On peut également envisager avec le système d'accès selon l'invention des applications qui combinent la réception satellite avec une mémoire numérique importante, directement exploitable sur le téléviseur d'une classe.

Dans les entreprises, les commerces et les lieux publics, le visionnement d'images est rendue plus ergonomique et plus productif avec le système d'accès selon l'invention, par exemple pour des applications de promotions économiques ou touristiques destinées au grand public.

Dans un mode préféré de réalisation de l'invention, sur chaque site local d'accès, chaque poste de télévision est en outre pourvu de moyens locaux d'interface interposés entre ce poste de télévision et une prise de connexion au réseau vidéo de type RJ45 ou autres, ces moyens locaux d'interface étant agencés, d'une part, pour recevoir des signaux de pilotage issus des moyens portatifs de pilotage et, d'autre part, pour transmettre ces signaux de pilotage à l'unité centrale via le réseau vidéo.

On peut avantageusement prévoir que les moyens portatifs de pilotage comprennent un clavier à infrarouge et que les moyens locaux de réception et de transmission comprennent des moyens pour convertir les signaux infrarouges reçus en signaux transmissibles sur le réseau vidéo.

Ce mode de réalisation est particulièrement recommandé pour l'équipement de salles multimédia puisqu'il permet à l'animateur ou à l'enseignant de pouvoir piloter l'unité centrale et de "surfer" sur le réseau Internet sans être tenu d'être à proximité immédiate du poste de télévision.

Les réseaux vidéo concernés par le système d'accès selon l'invention sont généralement, mais non exclusivement, des réseaux VDI (Voix/Données/Images). Le système d'accès selon l'invention peut de préférence comprendre en outre sur le site central des moyens de matrice de commutation prévus pour connecter au réseau vidéo l'unité centrale et une ou plusieurs autres sources d'informations, ainsi que des moyens pour gérer les diverses demandes d'accès à l'unité centrale en provenance des sites locaux d'accès. Il est à noter que chaque poste de télévision peut en outre être avantageusement pourvu de moyens portatifs pour sélectionner la visualisation sur ce poste d'une source d'informations parmi la pluralité de sources d'informations accessibles à partir de la matrice de commutation.

Suivant un autre aspect de l'invention, il est proposé un procédé pour accéder à des informations numériques sur un réseau vidéo, mis en ouvre dans le système selon l'invention, caractérisé en ce qu'il comprend une conversion d'informations numériques provenant de ressources numériques disponibles depuis un site central en informations analogiques aptes à être transportées sur un réseau vidéo pour être fournies à une pluralité de sites d'accès pourvus de postes de télévision connectés au réseau vidéo tel que défini dans la revendication 8.

Ce procédé d'accès comprend en outre, depuis chaque site de réception pourvu d'un poste de télévision, un pilotage à distance d'une ou plusieurs ressources numériques. Ce pilotage à distance est par exemple réalisé sous la forme d'une saisie locale de données de pilotage et d'une transmission de signaux de pilotage sur le réseau vidéo. Ce procédé est particulièrement adapté pour procurer depuis un poste de télévision relié à un réseau vidéo un accès et une navigation sur le réseau Internet, mais également sur un réseau informatique local au travers d'un poste de travail informatique connecté à ce réseau ou d'un poste serveur. On peut aussi, avec le procédé selon l'invention, consulter, diffuser et piloter à distance sur une simple paire torsadée, les ressources d'un serveur vidéo-numérique.

D'autres particularités et avantages de l'invention apparaîtront encore dans la description ci-après. Aux dessins annexés donnés à titre d'exemples non limitatifs:
- la figure 1 illustre un exemple de réalisation d'un système selon l'invention;
- la figure 2 illustre un exemple de réalisation d'une unité centrale faisant fonction d'interface vidéo/informatique; et
- la figure 3 illustre un exemple de réalisation simplifiée d'un système selon l'invention.

On va maintenant décrire un exemple de réalisation d'un système d'accès selon l'invention, en référence aux figures précitées.

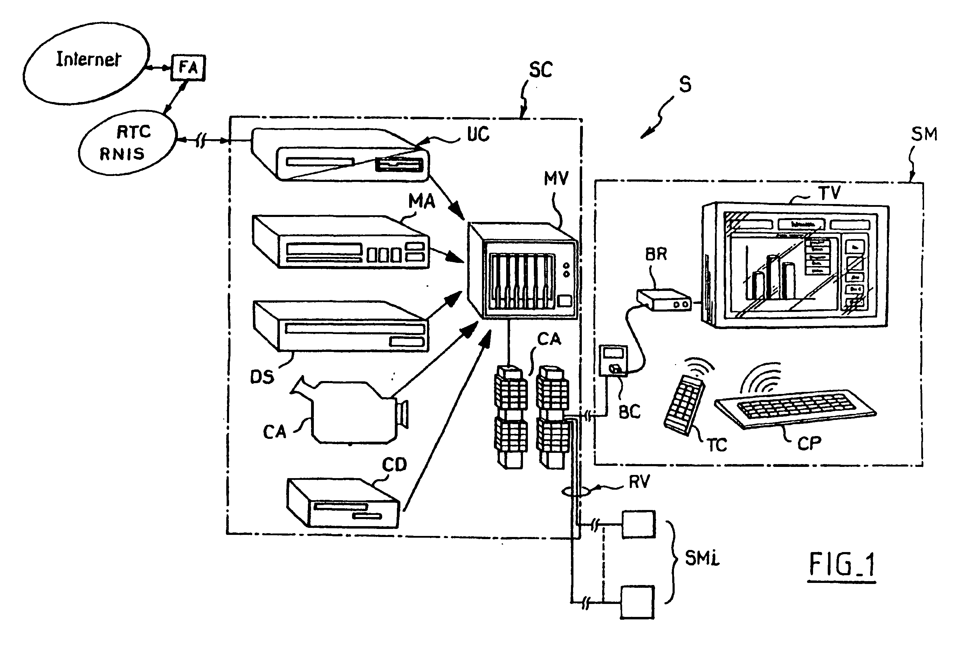

Un système S d'accès à des informations numériques sur un réseau VDI selon l'invention comprend, en référence à la figure 1, en un site central SC, une unité centrale UC réalisant la fonction d'interface vidéo/informatique et reliée, via le réseau téléphonique commuté RTC ou via tout autre réseau de communication tel qu'un réseau numérique à intégration de service RNIS (ISDN), par un fournisseur d'accès FA au réseau Internet, et une matrice de commutation audio-vidéo MV reliée à un réseau structuré bifilaire RV, par exemple un réseau VDI (voix/données/images). Le système S comprend en outre, dans un ensemble de sites locaux SMi, SM connectés au site central SC par le réseau RV, un poste de télévision TV connecté à une borne de connexion BC via un boîtier récepteur BR et pourvu d'un boîtier de télécommande spécifique TC et d'un clavier infrarouge CP permettant de piloter à distance l'unité centrale UC. Un tel clavier infrarouge peut par exemple être utilisé jusqu'à 7 mètres de distance du téléviseur, et intègre de préférence une souris et les touches permettant d'activer la source recherchée.

La matrice de commutation audio-vidéo MV est conçue pour recevoir des informations en provenance de plusieurs sources telles que l'unité centrale UC, un magnétoscope MA, un démodulateur satellite DS, une caméra vidéo, ou un lecteur de CD-ROM, et est connectée en sortie à un système de câblage CA auquel sont reliées les différentes branches du réseau vidéo en étoile.

L'unité centrale UC est par exemple conçue autour d'un micro-ordinateur standard complété par une carte CG d'interface VGA permettant une conversion du mode VGA en vidéo composite de haute qualité, une carte CR d'accès à Internet incluant un modem, une carte CI de réception infrarouge conçue pour recevoir les signaux de pilotage émis à partir du clavier infrarouge et transmis sur le réseau vidéo, et une carte CV d'émission d'informations sur le réseau vidéo. Il est à noter que le système selon l'invention utilise en pratique la partie vidéo d'un réseau VDI La matrice de commutation audio vidéo permet de réaliser sur un réseau de type "paires torsadées" toutes les applications multimédia.

L'unité centrale UC peut aussi être raccordée, via une carte de communication telle qu'une carte Ethernet®, à un réseau informatique pourvu d'un équipement de communication permettant un accès au réseau Internet via un réseau de télécommunication tel que le réseau RTC ou un réseau numérique RNIS.

Dans une version simplifiée de mise en oeuvre de l'invention, le système d'accès S' comprend, sur le site central SC, l'unité centrale UC assurant la fonction d'interface vidéo/informatique reliée à un boîtier diffuseur DV permettant de diffuser les informations provenant de l'unité centrale vers plusieurs salles multimédia SM équipées d'un poste de télévision TV et reliées à un réseau vidéo, d'un boîtier de réception BR interposé entre ce poste de télévision TV et une borne de connexion BC au réseau vidéo, et d'un clavier infrarouge CP.

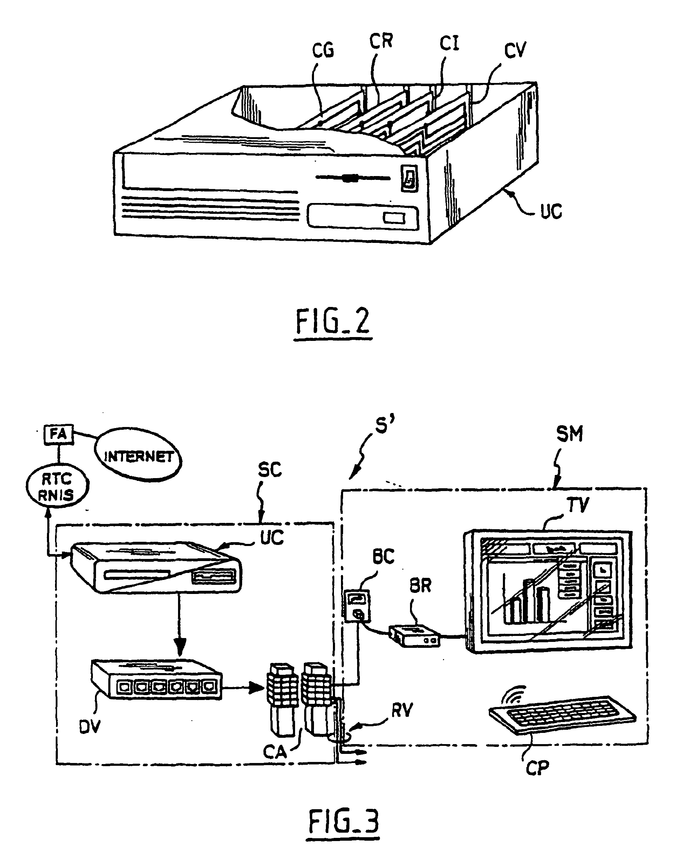

On va maintenant décrire un exemple de mise en oeuvre du procédé d'accès selon l'invention, en référence aux figures 1 et 2. On considère par exemple un établissement scolaire équipé d'un site central multimédia SC connecté au réseau Internet, et à diverses autres sources d'informations tels que des programmes de télévision par satellite et un lecteur de CD-ROM. Lors d'un cours de géographie se déroulant dans l'une des salles multimédia SM de l'établissement, un enseignant décide d'illustrer ses propos par la visualisation de documents accessible sur le serveur Web d'une revue économique. Il sélectionne alors à partir du boîtier de télécommande TC la source d'informations corresponde, en l'occurrence le réseau Internet. Les signaux correspondant à cette sélection sont transmis via le réseau VDI à la matrice de commutation MV qui, après test de la disponibilité de la source demandée, va commuter l'unité centrale UC interface vidéo/informatique vers la salle multimédia SM d'où provient la demande d'accès. L'enseignant prend alors dans ses mains le clavier infrarouge CP qui possède toutes les fonctionnalités d'un clavier d'ordinateur y compris un équipement de type "trackball" équivalent à une souris. A l'aide du clavier sans fil, l'enseignant va réaliser la connexion au site qu'il souhaite consulter, puis naviguer sur ce site ou "surfer" vers d'autres sites, tout cela sous les yeux de l'ensemble de la classe qui assiste en temps réel à l'ensemble des opérations d'accès et de consultation. Ceci est rendu possible par l'utilisation d'un poste de télévision qui permet une visualisation collective dans de bonnes conditions. L'enseignant va pouvoir commenter en direct les documents auxquels il a accédé et commuter éventuellement sur une autre source d'informations, par exemple sur un CD-ROM localisé dans le site central SC, en manipulant le boîtier de télécommande spécifique TC.

Il est à noter que le boîtier récepteur BR, chargé de recevoir les signaux infrarouge issus du clavier de pilotage CP et éventuellement du boîtier de télécommande TC et de transmettre ces signaux sur le réseau VDI peut être fabriqué en mettant en oeuvre des techniques bien connues en opto-électronique, électronique vidéo et micro-informatique. Il en est de même pour les cartes d'interface intégrées dans l'unité centrale UC.

Le système d'accès selon l'invention permet d'accéder à l'ensemble des possibilités des réseaux Internet et Intranet, notamment des créations de pages, des mises en place de liens avec des sites Internet, des forums de discussion. Il peut bien sûr prendre en compte bien d'autres sources d'informations telles que des CD-ROM ou des sources connectées à un réseau interne.

Dans une autre application avantageuse du système d'accès selon l'invention dans un établissement scolaire pourvu d'une liaison par satellite avec un fournisseur de films et de documentaires, on effectue un téléchargement par satellite d'un ou plusieurs films dans un vidéodisque numérique de grande capacité accessible sur le site central. Le film peut alors être visionné en totalité ou partiellement sur un poste de télévision d'une salle reliée au réseau vidéo, sur commande sélective d'un enseignant à une heure de son choix. Cette application peut aussi concerner des services de télévision payante dans des hôtels, des avions, des paquebots ou des hôpitaux.

La gestion du système d'accès selon l'invention est réalisée par exécution au niveau de l'unité centrale d'un ensemble de logiciels. On peut notamment citer des logiciels de messagerie adressable, des logiciels de gestion multi-sites, et un logiciel permettant le multiplexage à la demande des fonctions audio à partir d'un choix supérieur à deux langues, dans le signal vidéo. Des logiciels de service spécifiques peuvent être développés en fonction des secteurs d'application du système d'accès selon l'invention. Ainsi, pour l'équipement hôtelier, ces logiciels de service peuvent inclure les fonctionnalités de facturation des services vidéo et de réservation de services divers. Pour l'équipement hospitalier, on peut prévoir la gestion des commandes à distance de repas spécifiques à un régime, les consultations du dossier d'un patient au pied du lit ou le visionnement sur écran de télévision de radiographies et d'images IRM.

Bien sûr, l'invention n'est pas limitée aux exemples qui viennent d'être décrits et de nombreux aménagements peuvent être apportés à ces exemples sans sortir du cadre de l'invention. On peut en particulier mettre en ouvre d'autres types de réseau vidéo que le réseau VDI, ou des structures de réseau autres que des réseaux en étoile, par exemple des architectures de bus. En outre, le clavier infrarouge de pilotage peut être conçu pour inclure les fonctionnalités vidéo (sélection de la source) et de pilotage. Il est à noter que le système d'accès selon l'invention peut s'adapter à tout type de câblage et à tout type d'équipement vidéo et informatique du marché.

## Revendications

1. Système (S, S') destiné à être installé dans des établissements collectifs ou publics tels que éducatifs, hôteliers, hospitaliers ou tertiaires, pour accéder à des informations numériques sur un réseau vidéo (RV), comprenant:
- en une pluralité de sites d'accès (SM, SMi), des postes de télévision (TV) connectés au réseau vidéo (RV), des moyens (CP) pour piloter à distance de manière sélective une ou plusieurs ressources numériques, comprenant un clavier à infrarouge avec équipement de type "trackball" équivalent à une souris, et des moyens locaux d'interface (BR) interposés entre chaque poste de télévision (TV) et une borne (BC) de connexion au réseau vidéo (RV), ces moyens locaux d'interface (BR) étant agencés, pour recevoir des signaux de pilotage transmis par voie infrarouge par les moyens de pilotage (CP), et
- en un site central (SC) une unité centrale (UC) comprenant des moyens (CV) pour émettre des informations sur le réseau vidéo, des moyens d'accès à des ressources numériques internes et externes comprenant internet, et des moyens (CG) pour convertir des informations numériques provenant de ressources numériques locales ou distantes en informations analogiques aptes à être transportées sur le réseau vidéo (RV),
**caractérisé en ce que** les moyens locaux d'interface (BR) comprennent des moyens pour convertir les signaux de pilotage transmis par voie infrarouge en signaux transmissibles sur le réseau vidéo (RV) et sont agencés pour transmettre lesdits signaux à l'unité centrale via ledit réseau vidéo (RV),
et **en ce que** l'unité centrale (UC) comprend en outre une carte (CJ)de réception infrarouge conçue pour recevoir lesdits signaux de pilotage desdites ressources numériques ainsi transmis,
de sorte que l'utilisateur peut naviguer sur internet et créer des pages à partir de l'un des sites d'accès (SM, SMi).

2. Système (S, S') selon la revendication 1, **caractérisé en ce que** les informations converties et les signaux de pilotage sont transmis sur une paire torsadée unique.

3. Système (S, S') selon l'une des revendications 1 ou 2, **caractérisé en ce qu'**il comprend en outre, au niveau du site central (SC), des moyens (CR) pour accéder à un réseau de communication interne ou externe.

4. Système (S) selon l'une quelconque des revendications précédentes, **caractérisé en ce qu'**il comprend en outre sur le site central (SC) des moyens de matrice de commutation (MV) prévus pour connecter au réseau vidéo (RV) l'unité centrale (UC) et une ou plusieurs autres ressources (MA, DS, CA, CD), notamment des ressources numériques.

5. Système (S) selon la revendication 4, **caractérisé en ce qu'**il comprend en outre sur le site central (SC) des moyens pour gérer les diverses demandes d'accès à l'unité centrale (UC) en provenance des sites locaux d'accès.

6. Système selon l'une quelconque des revendications précédentes, **caractérisé en ce qu'**il comprend en outre, au niveau du site central, des moyens pour accéder à un réseau informatique interne ou externe.

7. Système (S, S') selon l'une quelconque des revendications précédentes, **caractérisé en ce que** le réseau vidéo est un réseau VDI (Voix/Données/Images).

## Claims

1. System (5, 5') intended for installation in collective or public establishments such as educational, hotel, hospital or tertiary establishments for accessing digital information on a video network (RV), comprising:
- on a plurality of access sites (SM, SMi), television sets (TV) connected to the video network (RV), means (CP) for remotely selectively controlling one or several digital resources, comprising an infrared keyboard provided with a trackball-type equipment equivalent to a mouse, and local interface means (BR) interposed between each television set (TV) and a terminal (BC) for connection to the video network (RV), said local interface means (BR) being arranged for receiving control signals transmitted by infrared way by the control means (CP), and
- on a central site (SC) a central unit (UC) comprising means (CV) for emitting information on the video network, means for accessing internal and external digital resources including Internet, and means (CG) for converting digital information originating from local or remote digital resources into analog information able to be conveyed on the video network (RV),
**characterized in that** the local interface means (BR) comprise means for converting the control signals transmitted by infrared way into signals which can be transmitted on the video network (RV) and are arranged for transmitting said signals to the central unit via said video network (RV),
and **in that** the central unit (UC) further comprises an infrared reception card (CJ) designed for receiving said such transmitted control signals of said digital resources, so that the user may surf on Internet and create pages from one of the access sites (SM, SMi).

2. System (S, S') according to claim 1, **characterized in that** the converted information and the control signals are transmitted on a single twisted pair.

3. System (S, S') according to any of claims 1 or 2, **characterized in that** it further comprises, at the level of the central site (SC), means (CR) for accessing an internal or external communication network.

4. System (S) according to any of preceding claims, **characterized in that** it further comprises on the central site (SC) commutation matrix means (MX) provided for connecting the central unit (UC) and one or several resources (MA, DS, CA, CD), particularly digital resources, to the video network (RV).

5. System (S) according to claim 4, **characterized in that** it further comprises on the central site (SC) means for managing the various requests for accessing the central unit (UC) from access local sites.

6. System according to any of the preceding claims, **characterized in that** it further comprises, at the level of the central site, means for accessing an internal or external computer network.

7. System (S, S') according to any of the preceding claims, **characterized in that** the video network is a VDI network (Voice/Data/Images).

## Patentansprüche

1. Zugangssystem (S, S) zu digitalen Informationen in einem Videonetz (RV), wobei dieses System zum Einbau in kollektiven oder öffentlichen Anstalten wie Bildungs-, Hotel-, Krankenhaus- oder Dienstleistungsanstalten bestimmt ist und aufweist:
- an einer Mehrzahl von Zugangsstellen (SM, SMi) mit dem Videonetz (RV) verbundene Fernsehgeräte (TV), Fernbedienungseinrichtungen (CP) zur selektiven Steuerung einer oder mehrerer digitaler Signalquellen, mit einer Infrarottastatur, die eine einer Maus entsprechende Einrichtung vom "Trackball"-Typ besitzt, und örtlichen Schnittstelleneinrichtungen (BR), die zwischen jedes Fernsehgerät (TV) und einem Verbindungsanschluss (BC) zum Videonetz (RV) eingeschaltet und zum Empfang von auf dem Infrarotweg durch die Fernbedienungseinrichtung (CP) übermittelten Steuersignalen eingerichtet sind,
- in einer zentralen Stelle (SC) eine Zentraleinheit (UC) mit Mitteln (CV) zum Aussenden von Informationen im Videonetz, Zugangseinrichtungen zu internen und externen digitalen, Internet einschließenden Signalquellen und Mitteln (CG) zum Wandeln der von den örtlichen oder entfernten Signalquellen stammenden digitalen Signale in analoge Informationen, die im Videonetz (RV) übertragbar sind,
**dadurch gekennzeichnet, dass** die örtlichen Schnittstelleneinrichtungen (BR) Mittel zum Wandeln der auf dem infrarotweg übertragenen Steuersignale in über das Videonetz (RV) übertragbare Signale aufweisen und zur Aussendung dieser Signale zu der Zentraleinheit über das Videonetz (RV) eingerichtet sind,
und dass die Zentraleinheit (UC) unter anderem eine Infrarot-Empfangskarte (CJ) aufweist, die zum Empfang der so übertragenen Steuersignale der genannten digitalen Signalquellen ausgebildet ist,
so dass der Benutzer bei einer der Zugangsstellen (SM, SMi) auf Internet navigieren und Seiten schaffen kann.

2. System (S, S') nach Anspruch 1, **dadurch gekennzeichnet, dass** die gewandelten Informationen und die Steuersignale über ein einziges verdrilltes Leitungspaar übermittelt werden.

3. System (S, S') nach Anspruch 1 oder 2, **dadurch gekennzeichnet, dass** es ferner im Bereich der zentralen Stelle (SC) Zugangsmittel (CR) zu einem internen oder externen Kommunikationsnetz aufweist.

4. System (S) nach einem der vorhergehenden Ansprüche, **dadurch gekennzeichnet, dass** es ferner an der zentralen Stelle (SC) eine Schaltmatrixeinrichtung (MV) aufweist, die zum Verbinden der Zentraleinheit (UC) und einer oder mehrerer anderer Signalquellen (MA, DS, CA, CD), insbesondere digitale Signalquellen, mit dem Videonetz (RV) vorgesehen ist.

5. System (S) nach Anspruch 4, **dadurch gekennzeichnet, dass** es ferner an der zentralen Stelle (SC) Mittel zur Verwaltung der verschiedenen von den örtlichen Zugangseinrichtungen an die Zentraleinheit (UC) gerichteter Zugangsanforderungen aufweist.

6. System nach einem der vorhergehenden Ansprüche, **dadurch gekennzeichnet, dass** es ferner im Bereich der zentralen Stelle Mittel zum Zugang zu einem internen oder externen Computernetz aufweist.

7. System (S, S') nach einem der vorhergehenden Ansprüche, **dadurch gekennzeichnet, dass** das Videonetz ein AVD-Netz (Audio/Video/Daten) ist.
